# DEMANDE DE BREVET EUROPEEN

(11) **EP 2 487 095 A1**
(43) Date de publication de la demande: **15.08.2012**
(21) Numéro de dépôt: 11368003.7
(22) Date de dépôt: 11.02.2011
(51) Int. Cl.: B62K 19/36

(54) **Tige de selle télescopique pur bicyclette**

(71) Demandeur: Michel, Isnard, 06300 Nice (FR)
(72) Inventeur: Michel, Isnard, 06300 Nice (FR)

(57) **Abrégé**

Tige de selle télescopique pour bicyclette.

L'invention permet au cycliste de changer la hauteur de selle rapidement, sans descendre de vélo, sans lâcher le guidon, la selle demeurant toujours bien alignée dans l'axe du cycle.

Elle est constituée d'un tube fixe(3) où coulisse un tube mobile(1) supportant la selle, d'un système d'indexage angulaire, constitué de pions(4) et de lumières oblongues(51), d'un mécanisme de verrouillage aux différentes hauteurs de selle, constitué de billes(6), de logements hémisphériques(52) et d'un verrou(7) pouvant être actionné du guidon par l'intermédiaire d'une tige(9), d'un câble, d'une gaine et d'un levier fixé au guidon.

Le bas du tube mobile(1) comporte un piston(30) étanche dans le tube fixe(3), l'ensemble formant un ressort pneumatique assurant le rappel de la selle vers le haut.

Il est étanche à la poussière et à l'eau par les joints(53) et(54).

Ce dispositif est particulièrement destiné aux vélos tout terrain.

## Description

La présente invention concerne une tige de selle télescopique pour les bicyclettes et particulièrement les vélos tout terrain, permettant un changement rapide de hauteur de selle commandé du guidon.

Traditionnellement, le vététiste qui aborde une pente raide doit s'arrêter et mettre pied à terre pour desserrer un collier et descendre la selle, la mettre en ligne et resserrer le collier.

Le dispositif selon l'invention permet au cycliste, tout au long de son parcours et des changements de terrain, de changer la hauteur de sa selle à des positions prédéfinies, sans descendre de vélo, sans lâcher le guidon, la selle demeurant toujours bien alignée avec l'axe de la bicyclette.

Pour changer de position, l'utilisateur doit soulager la selle du poids qu'il exerce et pousser d'un doigt un petit levier fixé au guidon : cela déverrouille la translation verticale de la selle.

Le système comporte un tube cylindrique, que nous appellerons tube fixe, destiné à être fixé rigidement sur le cadre du vélo, dans le logement habituel du tube de selle. Ce tube fixe contient un autre tube cylindrique supportant la selle, tube que nous appelons tube mobile, car il peut se déplacer de haut en bas à l'intérieur du premier.

Ce déplacement est une translation pure, sans possibilité de rotation angulaire, car le tube mobile comporte, vissés sur son diamètre extérieur, des pions ajustés qui coulissent dans des lumières oblongues d'une bague fixe, rigidement liée au tube fixe. Ces lumières et ces pions assurent par ailleurs la limitation haute et basse de la course.

La bague fixe comporte en outre des empreintes hémisphériques réalisées dans son diamètre intérieur, à différentes hauteurs correspondant aux réglages de selle possibles.

Le tube mobile comporte entre ses extrémités un logement intérieur cylindrique contenant un verrou pouvant y coulisser axialement; il comporte également, à environ mi-hauteur de ce logement, des trous radiaux débouchant, où sont logées des billes.

Le verrou a une forme cylindrique possédant entre ses deux extrémités une gorge radiale de diamètre inférieur, la transition entre les deux diamètres se faisant par une zone conique. Le verrou est maintenu vers le haut, plaqué contre un épaulement du logement du tube mobile, par un ressort de compression.

Dans cette position haute du verrou, les billes sont écartées radialement par le grand diamètre de celui-ci et sortent partiellement des trous radiaux pour se plaquer dans les empreintes hémisphériques de la bague fixe, bloquant toute translation relative des tubes.

Lors de la commande de la part du pilote, le verrou se déplace vers le bas contre l'action du ressort, jusqu'à une position où la gorge du verrou se retrouve face aux billes et leur permet de se rétracter radialement hors des empreintes de la bague fixe : cela libère le mouvement axial du tube mobile supportant la selle.

Ce déverrouillage est obtenu par l'intermédiaire d'une tige vissée au verrou et dont l'extrémité supérieure, débouchant hors du support de selle, reçoit le câble gainé de commande actionné par le levier fixé au guidon.

Le bas du tube fixe est étanche, obturé par un bouchon; dans le bas du tube mobile est vissé un piston avec son joint assurant l'étanchéité radiale avec le tube fixe. L'ensemble forme un ressort pneumatique exerçant le rappel du tube mobile vers le haut, et ce avec un niveau de pression d'air ajustable grâce à une valve placée au bas du bouchon et compatible avec les pompes à vélo standard.

L'ensemble des deux tubes est totalement étanche vis-à-vis de l'extérieur par des joints racleurs qui protègent le mécanisme des poussières et de l'eau : un joint est logé au sommet du tube fixe pour l'étanchéité avec le tube mobile, un autre est logé dans le support de selle pour l'étanchéité avec la tige de commande.

Les dessins annexés illustrent l'invention :

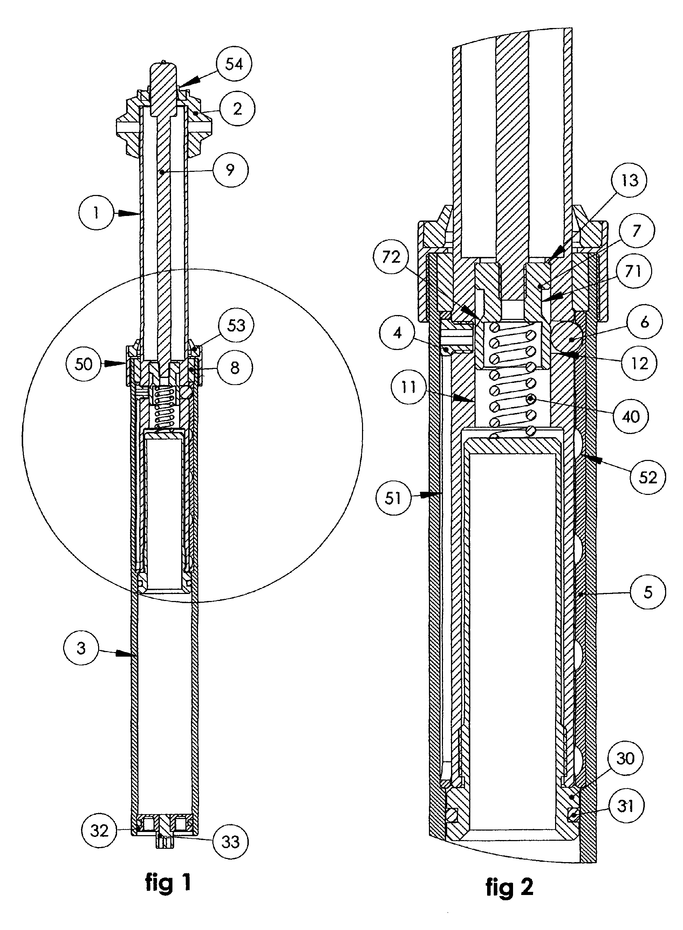

La figure 1 représente en coupe le système en position verrouillée haute.
La figure 2 en est le détail, à échelle grossie, au niveau du système de verrouillage.

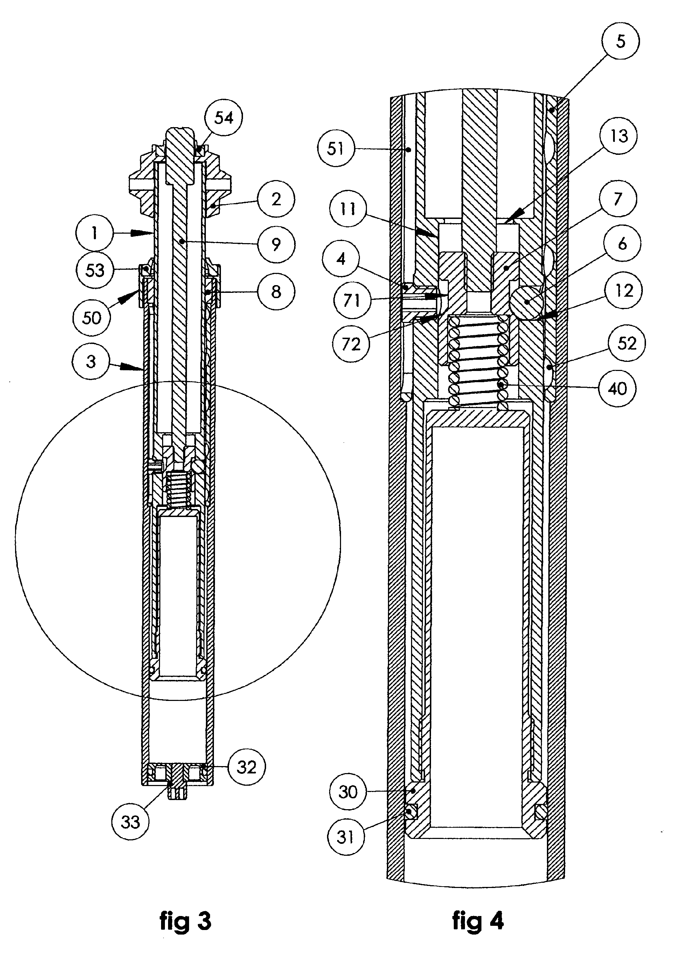

La figure 3 représente en coupe le système en position transitoire déverrouillée.
La figure 4 en est le détail, à l'échelle grossie au niveau du système de verrouillage.

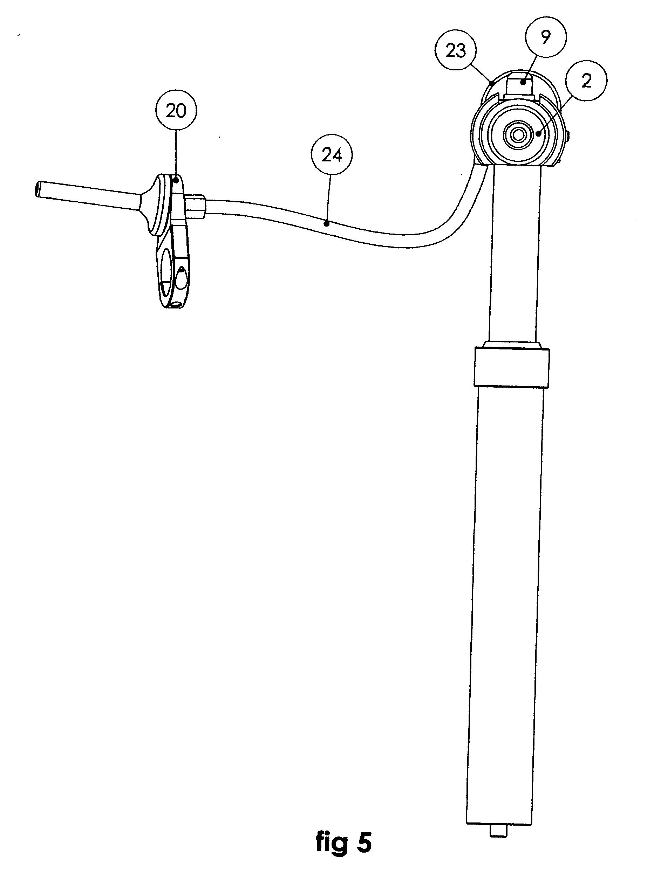

La figure 5 représente l'ensemble complet équipé de son dispositif de commande.

En référence à ces dessins, le système comporte un tube fixe(3), destiné à être fixé sur le cadre d'un vélo. A l'intérieur de ce tube fixe(3) peut coulisser de haut en bas un tube mobile(1), sur l'extrémité supérieur duquel est fixé rigidement le support de selle(2). Ce déplacement est une translation pure, sans possibilité de rotation angulaire, car le tube mobile(1) comporte, vissés sur son diamètre extérieur, des pions(4) ajustés qui coulissent dans des lumières oblongue(51) d'une bague(5) fixe, rigidement liée au tube fixe(3).

Ces lumières(51) et ces pions(4) assurent par ailleurs la limitation haute et basse de la course.

La bague fixe(5) comporte, en outre, des empreintes hémisphériques(52) réalisées dans son diamètre intérieur, à différentes hauteurs correspondant aux réglages de selle possibles. Le tube mobile(1) comporte entre ses extrémités un logement intérieur(11) cylindrique contenant un verrou(7) pouvant y coulisser axialement ; il comporte également, à environ mi-hauteur de ce logement(11), des trous radiaux(12) débouchant, où sont logées des billes(6).

Le verrou(7) a une forme cylindrique possédant entre ses deux extrémités une gorge radiale(71) de diamètre inférieur, la transition entre les deux diamètres se faisant par une zone conique(72)

Le verrou(7) est maintenu vers le haut, plaqué contre un épaulement(13) du logement(11) du tube mobile(1), par un ressort de compression(40).

Dans cette position haute du verrou(7), les billes(6) sont écartées radialement par le grand diamètre de celui-ci et sortent partiellement des trous radiaux(12) pour se plaquer dans les empreintes hémisphériques(52) de la bague fixe(5), bloquant toute translation relative des tubes(3) et(1).

Lors de commande de la part du pilote, le verrou(7) se déplace vers le bas contre l'action du ressort(40), jusqu'à une position où la gorge(71) du verrou(7) se retrouve face aux billes(6) et leur permet de se rétracter radialement hors des empreintes(52) de la bague fixe(5) : cela libère le mouvement axial du tube mobile(1) supportant la selle.

Ce déverrouillage est obtenu par l'intermédiaire d'une tige(9) vissée au verrou(7) et dont l'extrémité supérieure, débouchant hors du support(2) de selle, reçoit le câble gainé(23) et(24) de commande actionné par le levier(20) fixé au guidon.

Le bas du tube fixe(3) est étanche, obturé par un bouchon(32), dans le bas du tube mobile(1) est vissé un piston(30) avec son joint(31) assurant l'étanchéité radiale avec le tube fixe(3). L'ensemble forme un ressort pneumatique exerçant le rappel du tube mobile(1) vers le haut et ce avec un niveau de pression d'air ajustable grâce à une valve(33) placée au bas du bouchon(32) et compatible avec les pompes à vélo standard.

Une bague(50) est visée au sommet du tube fixe(3) ; d'une part elle maintient axialement logé dans-le-tube fixe(3), un palier(8) de guidage du tube mobile(1), d'autre part elle contient un joint racleur(53) dont la lèvre assure l'étanchéité avec le tube mobile(1). Un autre joint racleur(54) est logé dans le support(2) de selle, et assure l'étanchéité avec la tige de commande(9). L'ensemble du mécanisme est ainsi à l'abri des poussières et de l'eau.

## Revendications

1. Dispositif pour changer rapidement la hauteur de selle d'un vélo, commandé au guidon, **caractérisé en ce que** le tube(1), supportant la selle par l'intermédiaire du support(2), peut coulisser à l'intérieur d'un tube fixe(3) fixé au cadre du vélo, tout en restant indexé angulairement par des pions(4) rigidement liés au tube(1) et coulissant dans des lumières oblongues(51) d'une bague fixe(5) rigidement liée à l'intérieur du tube fixe(3), l'ensemble des pions(4) dans les lumières assurant par ailleurs la limitation haute et basse de la course.

2. Dispositif selon la revendication 1 **caractérisé en ce que** ce tube(1) comporte entre ses extrémités un logement lisse coaxial(11), où coulisse un verrou(7), et contenant également des billes(6) logées dans des trous radiaux débouchant(12) situés environ à mi-hauteur de ce logement(11).

3. Dispositif selon les revendications 1 et 2 **caractérisé en ce que** le verrou(7) a une forme cylindrique possédant entre ses extrémités une gorge radiale(71) de diamètre inférieur, la transition entre les deux diamètres se faisant par une zone conique(72).

4. Dispositif selon les revendications 1, 2, et 3 **caractérisé en ce que**, en l'absence de commande de la part du pilote, le verrou est maintenu axialement vers le haut contre l'épaulement(13) du logement lisse(11), par un ressort de rappel(40) en appui sur le haut du piston(30) vissé au bas du tube mobile(1).

5. Dispositif selon les revendications 1, 2, 3, et 4 **caractérisé en ce que** la bague fixe(5) comporte outre ses lumières(51), des empreintes hémisphériques(52) réalisées dans son diamètre intérieur, à différentes hauteurs correspondant aux réglages de selle possibles.

6. Dispositif selon les revendications 1, 2, 3, 4 et 5 **caractérisé en ce que** dans cette position haute du verrou(7), les billes(6), écartées radialement par le grand diamètre de celui-ci, sortent partiellement de leurs trous respectifs(12) et sont plaquées dans les empreintes hémisphériques(52) de la bague fixe (5), bloquant toute translation relative du tube(1) par rapport tube fixe(3) à une position de réglage donnée.

7. Dispositif selon les revendications 1, 2, 3, 4, 5, et 6 **caractérisé en ce que** lors de la commande de la part du pilote, le verrou(7) est amené à se déplacer vers le bas, contre l'action du ressort(40) jusqu'à une position de déverrouillage, dans laquelle sa gorge(71) se retrouve à la hauteur des billes(6) et leur permet de se rétracter radialement hors des empreintes hémisphériques de la bague(5), libérant le mouvement axial du tube(1) dans le tube fixe(3).

8. Dispositif selon les revendications 1 à 7 **caractérisé en ce que**, cette position de déverrouillage est obtenue par l'intermédiaire de la tige(9) rigidement liée en son extrémité inférieure au verrou(7) et dont l'extrémité supérieure, dépassant du support(2), est commandée par un ensemble câble(23) et gaine(24) actionné par un levier(20) situé au guidon du vélo.

9. Dispositif selon les revendications 1 à 8 **caractérisé en ce que**, le bas du tube fixe(3) est étanche obturé par le bouchon(32), que le piston(30) comporte un joint(31) assurant l'étanchéité radiale avec le tube fixe(3), l'ensemble formant un ressort pneumatique permettant le retour du tube(1) vers le haut, et ce avec un niveau de pression d'air ajustable grâce à la valve(33) fixée au bas du bouchon(32) et compatible avec les pompes à vélo standard.

10. Dispositif selon les revendications 1 à 9 **caractérisé en ce que**, l'ensemble du mécanisme est étanche, protégé de la poussière et de l'eau, d'une part par un joint(53) monté sur la bague(50) vissée en haut du tube fixe(3) pour l'étanchéité avec le tube mobile(1) et d'autre part grâce à un joint(54) monté sur le support de selle(2) coiffant le tube mobile(1), pour l'étanchéité avec la tige de commande(9).
